# EUROPEAN PATENT APPLICATION

(11) **EP 2 731 287 A1**
(43) Date of publication of application: **14.05.2014**
(21) Application number: 12837621.7
(22) Date of filing: 23.05.2012
(51) Int. Cl.: H04J 14/02

(54) **METHOD, SYSTEM AND DEVICE FOR SWITCHING WAVELENGTH OF MULTI-WAVELENGTH PASSIVE OPTICAL NETWORK (PON)**

(71) Applicant: Huawei Technologies Co., Ltd, Shenzhen, Guangdong 518129 (CN)
(72) Inventor: GAO, Bo, Shenzhen Guangdong 518129 (CN); GAO, Jianhe, Shenzhen Guangdong 518129 (CN)
(74) Representative: Thun, Clemens
(86) International application number: PCT/CN2012/075921
(87) International publication number: WO 2013/173983

(57) **Abstract**

The present application provides a method for wavelength switching on a multi-wavelength passive optical network, including: duplicating, when an optical network unit needs to switch from a first wavelength channel to a second wavelength channel, downlink data to be sent to the optical network unit into multiple copies, and sending the multiple copies of the downlink data to the optical network unit separately through multiple wavelength channels, where the multiple wavelength channels include at least the first wavelength channel and the second wavelength channel; sending a downlink wavelength switching command to the optical network unit to instruct the optical network unit to switch a downlink receiving wavelength of the optical network unit to a downlink wavelength of the second wavelength channel; and stopping downlink data duplication and sending the downlink data to the optical network unit only through the second wavelength channel after determining that the downlink receiving wavelength switching of the optical network unit is successful. The present application further provides a multi-wavelength passive optical network system and an apparatus for wavelength switching in the multi-wavelength passive optical network system.

## Description

### FIELD OF THE INVENTION

The present application mainly relates to optical communications technologies, and in particular, to a method, a system, and an apparatus for wavelength switching on a multi-wavelength passive optical network (Passive Optical Network, PON).

### BACKGROUND OF THE INVENTION

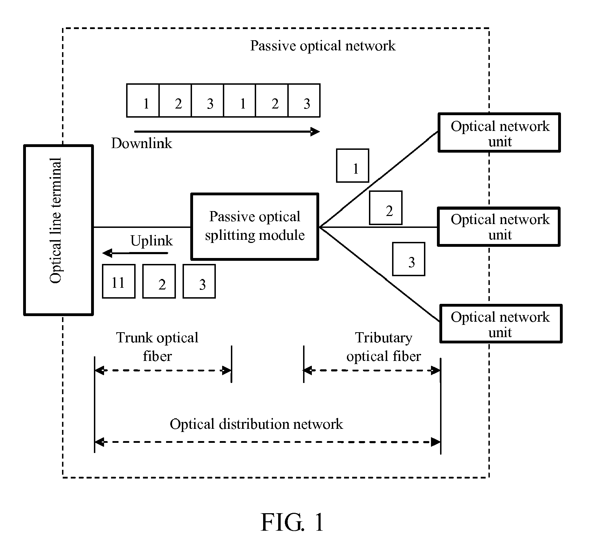

A passive optical network (PON) technology is currently a major broadband access technology. A traditional PON system is a point-to-multipoint network system based on a time division multiplexing (Time Division Multiplexing, TDM) mechanism. Refer to FIG. 1. Generally, a PON system includes an optical line terminal (Optical Line Terminal, OLT) located on a central office side, multiple optical network units (Optical Network Unit, ONU) located on a user side, and an optical distribution network (Optical Distributing Network, ODN) connected between the OLT and the ONUs. The ODN is used to distribute or multiplex data signals between the OLT and the ONUs, so that the multiple ONUs may share an optical transmission channel. In the PON system based on the TDM mechanism, a direction from an OLT to an ONU is called a downlink direction, where the OLT broadcasts a downlink data stream to all ONUs in TDM manner and each ONU receives only data that carries an identifier of the ONU; and a direction from an ONU to an OLT is called an uplink direction. Because the ONUs share an optical transmission channel, to ensure that no conflict occurs between uplink data of each ONU, the PON system adopts a time division multiple access (Time Division Multiple Access, TDMA) manner in the uplink direction, that is, an OLT allocates a timeslot to each ONU, and each ONU sends uplink data strictly according to the timeslot allocated by the OLT.

However, since the PON system adopts a TDM mechanism, a bandwidth available for a user in the PON system is generally limited because of an influence from a time division feature of the TDM mechanism. In addition, an available bandwidth of an optical fiber cannot be effectively utilized. Therefore, an emerging requirement for a broadband network application service cannot be met. To solve the problem while ensuring compatibility with an existing PON system, a hybrid PON system that integrates a wavelength division multiplexing (Wavelength Division Multiplexing, WDM) technology and a TDM technology is put forward in the industry. In the hybrid PON system, multiple wavelength channels are adopted for data sending and receiving between an OLT on a central office side and ONUs on a user side. That is, the hybrid PON system is a multi-wavelength PON system.

In the hybrid PON system, each ONU works on one of the multiple wavelength channels. In the downlink direction, the OLT adopts a downlink wavelength corresponding to each wavelength channel to broadcast downlink data to the multiple ONUs that work on the wavelength channels; while in the uplink direction, an ONU working on each wavelength channel may adopt an uplink wavelength of the wavelength channel in a timeslot allocated by the OLT to send uplink data to the OLT. In addition, the uplink transmitting wavelength and downlink receiving wavelength of an ONU can be dynamically adjusted. When the uplink transmitting wavelength and downlink receiving wavelength are adjusted to the uplink and downlink wavelengths of a certain wavelength channel, the ONU is capable of working on the wavelength channel. During practical work, to implement load balancing (Load Balance) between wavelength channels in the hybrid PON system, an OLT may need to instruct an ONU in a work process of the ONU to perform wavelength switching. For example, when a wavelength channel A is overloaded while a wavelength channel B is idle, the OLT may control, by using a wavelength switching instruction, partial ONUs that originally work on the wavelength channel A to switch to the wavelength channel B by adjusting their uplink transmitting wavelengths and downlink receiving wavelengths.

However, in a wavelength switching process of a certain ONU in the hybrid PON system, the OLT generally needs to first cache downlink data to be sent to the ONU and suspend authorizing an uplink bandwidth to the ONU, and at the same time the ONU also needs to cache uplink data to be sent to the OLT; normal service communication between the OLT and the ONU are not restored for uplink and downlink data sending and receiving until wavelength switching is completed. That is to say, a service between the OLT and the ONU is in an interrupted state in the wavelength switching process. In general, because a wavelength switching process needs to last several hundred milliseconds to several seconds, adopting the wavelength switching method will deteriorate a user's experience with a real-time service such as voice or video. When traffic congestion or burst occurs, a data packet loss may be further caused, thereby affecting service quality.

### SUMMARY OF THE INVENTION

For the foregoing problem, the present application provides a method for wavelength switching that may effectively mitigate impacts that a multi-wavelength PON system has on a service in a wavelength switching process of an ONU, so as to improve and optimize service quality. In addition, based on the method for wavelength switching, the present application further provides a multi-wavelength PON system and an apparatus for wavelength switching in the multi-wavelength passive optical network system.

A method for wavelength switching on a multi-wavelength PON includes: duplicating, when an optical network unit needs to switch from a first wavelength channel to a second wavelength channel, downlink data to be sent to the optical network unit into multiple copies, and sending the multiple copies of the downlink data to the optical network unit separately through multiple wavelength channels, where the multiple wavelength channels include at least the first wavelength channel and the second wavelength channel; sending a downlink wavelength switching command to the optical network unit to instruct the optical network unit to switch a downlink receiving wavelength of the optical network unit to a downlink wavelength of the second wavelength channel; and stopping downlink data duplication and sending the downlink data to the optical network unit only through the second wavelength channel after determining that the downlink receiving wavelength switching of the optical network unit is successful.

An apparatus for wavelength switching on a multi-wavelength PON includes: a data processing module, configured to duplicate, when an optical network unit needs to switch from a first wavelength channel to a second wavelength channel, downlink data to be sent to the optical network unit into multiple copies; a sending module, configured to send the multiple copies of the downlink data to the optical network unit separately through multiple wavelength channels, where the multiple wavelength channels include at least the first wavelength channel and the second wavelength channel; and a control module, configured to control the sending module to send a downlink wavelength switching command to the optical network unit, so as to instruct the optical network unit to switch a downlink receiving wavelength of the optical network unit to a downlink wavelength of the second wavelength channel, and after determining that the downlink receiving wavelength switching of the optical network unit is successful, control the data processing module to stop downlink data duplication and control the sending module to send the downlink data to the optical network unit only through the second wavelength channel.

A multi-wavelength PON system with M wavelength channels is provided, where M is larger than 1. The multi-wavelength passive optical network system includes at least one optical line terminal, multiple optical network units, and one optical distribution network, where the optical line terminal is connected to the multiple optical network units through the optical distribution network. The optical line terminal is configured to duplicate, when an optical network unit needs to switch from a first wavelength channel to a second wavelength channel, downlink data to be sent to the optical network unit into multiple copies, and send the multiple copies of the downlink data to the optical network unit separately through multiple wavelength channels that include at least the first wavelength channel and the second wavelength channel; send a downlink wavelength switching command to the optical network unit to instruct the optical network unit to switch a downlink receiving wavelength of the optical network unit to a downlink wavelength of the second wavelength channel; and stop downlink data duplication and send the downlink data to the optical network unit only through the second wavelength channel after determining that the downlink receiving wavelength switching of the optical network unit is successful.

According to a method, a system, and an apparatus for wavelength switching on a multi-wavelength PON that are provided in the present application, before an optical network unit performs wavelength channel switching, an optical line terminal duplicates downlink data and sends the downlink data simultaneously through multiple wavelength channels, thereby ensuring that the optical network unit can receive the downlink data from a corresponding wavelength channel in a wavelength channel switching process, no matter in which wavelength state a current downlink receiving wavelength of the optical network unit is. Therefore, even if the wavelength switching process needs to last a relatively long period of time, adopting technical solutions provided in the present application may still effectively ensure downlink service smoothness in a wavelength channel switching process, that is, it is avoided that a downlink service is in an interrupted state in the wavelength channel switching process, thereby improving a user's experience with a real-time service such as voice or video, effectively reducing a data packet loss, and ensuring service quality.

### BRIEF DESCRIPTION OF THE DRAWINGS

To describe the technical solutions in the embodiments of the present invention or in the prior art more clearly, the following briefly introduces the accompanying drawings required for describing the embodiments. Apparently, the accompanying drawings in the following description show merely some embodiments of the present invention, and persons of ordinary skill in the art may still derive other drawings from these accompanying drawings without creative efforts.
FIG. 1 is a schematic diagram of network architecture of a passive optical network system based on a time division multiplexing mechanism;
FIG. 2 is a schematic diagram of network architecture of a multi-wavelength passive optical network system according to an embodiment of the present application;
FIG. 3 is a flowchart of a method for wavelength switching on a multi-wavelength passive optical network according to a first embodiment of the present application;
FIG. 4 is a schematic diagram of a message format of a PLOAM message used to bear a wavelength switching command in the method for wavelength switching on a multi-wavelength passive optical network shown in FIG. 3;
FIG. 5 is a flowchart of a method for wavelength switching on a multi-wavelength passive optical network according to a second embodiment of the present application;
FIG. 6 is a flowchart of a method for wavelength switching on a multi-wavelength passive optical network according to a third embodiment of the present application;
FIG. 7 is a flowchart of a method for wavelength switching on a multi-wavelength passive optical network according to a fourth embodiment of the present application;
FIG. 8 is a schematic diagram of a frame structure of an EPON frame used to bear downlink data and downlink transmitting wavelength information in the method for wavelength switching on a multi-wavelength passive optical network shown in FIG. 7;
FIG. 9 is a flowchart of a method for wavelength switching on a multi-wavelength passive optical network according to a fifth embodiment of the present application;
FIG. 10 is a flowchart of a method for wavelength switching on a multi-wavelength passive optical network according to a sixth embodiment of the present application; and
FIG. 11 is a schematic structural diagram of an apparatus for wavelength switching on a multi-wavelength passive optical network according to an embodiment of the present application.

### DETAILED DESCRIPTION OF THE EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

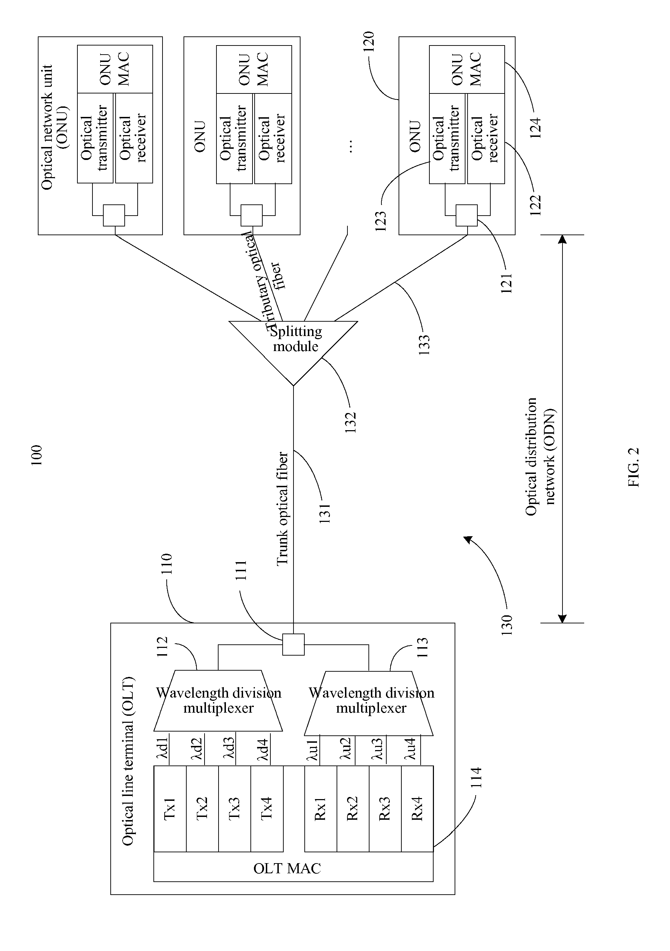

Refer to FIG. 2, which is a schematic diagram of network architecture of a multi-wavelength passive optical network (Multiple Wavelength PON, MWPON) system according to an embodiment of the present application. A multi-wavelength passive optical network system 100 includes at least one optical line terminal (OLT) 110, multiple optical network units (ONU) 120, and one optical distribution network (ODN) 130, where the optical line terminal 110 is connected to the multiple optical network units 120 in point-to-multipoint manner through the optical distribution network 130, and the multiple optical network units 120 share an optical transmission medium of the optical distribution network 130. The optical distribution network 130 may include a trunk optical fiber 131, an optical power splitting module 132, and multiple tributary optical fibers 133, where the optical power splitting module 132 may be set on a remote node (Remote Node, RN). In one aspect, the optical power splitting module 132 is connected to the optical line terminal 110 through the trunk optical fiber 131, and in another aspect, it is connected to the multiple optical network units 120 through the multiple tributary optical fibers 133.

In the multi-wavelength passive optical network system 100, communication links between the optical line terminal 110 and the multiple optical network units 120 may include multiple wavelength channels, where the multiple wavelength channels share an optical transmission medium of the optical distribution network 130 in wavelength division multiplexing (WDM) manner. Each optical network unit 120 may work on one of wavelength channels of the multi-wavelength passive optical network system 100, and each wavelength channel may bear services of one or multiple optical network units 120. In addition, optical network units 120 that work on a same wavelength channel may share the wavelength channel in time division multiplexing (TDM) manner. In this embodiment, as shown in FIG. 2, the multi-wavelength passive optical network system 100 that has four wavelength channels is taken as an example for a description. It should be understood that, in practical applications, the number of wavelength channels of the multi-wavelength passive optical network system 100 may also be determined according to a network requirement.

For ease of description, in this embodiment, the four wavelength channels of the multi-wavelength passive optical network system 100 are named wavelength channel 1, wavelength channel 2, wavelength channel 3, and wavelength channel 4. Each wavelength channel adopts a pair of uplink and downlink wavelengths. For example, the uplink wavelength and downlink wavelength of the wavelength channel 1 may be λu1 and λd1 respectively, the uplink wavelength and downlink wavelength of the wavelength channel 2 may be λu2 and λd2 respectively, the uplink wavelength and downlink wavelength of the wavelength channel 3 may be λu3 and λd3 respectively, and the uplink wavelength and downlink wavelength of the wavelength channel 4 may be λu4 and λd4 respectively. Each wavelength channel may have a corresponding wavelength channel identifier (for example, the channel numbers of the four wavelength channels may be 1, 2, 3, and 4). That is, a wavelength channel identifier has a matching relationship with the uplink wavelength and downlink wavelength of a wavelength channel identified by the wavelength channel identifier, and the optical line terminal 110 and the optical network units 120 are capable of learning the uplink wavelength and downlink wavelength of the wavelength channel according to the wavelength channel identifier. In addition, in a specific embodiment, uplink wavelengths λu1-λu4 of the wavelength channel 1, wavelength channel 2, wavelength channel 3, and wavelength channel 4 may satisfy λu1 < λu2 < λu3 < λu4. Similarly, their downlink wavelengths λd1-λd4 may satisfy λd1 < λd2 < λd3 < λd4.

In an embodiment, the optical line terminal 110 may include an optical coupler 111, a first wavelength division multiplexer 112, a second wavelength division multiplexer 113, multiple downlink optical transmitters Tx1-Tx4, multiple uplink optical receivers Rx1-Rx4, and a processing module 114, where the multiple downlink optical transmitters Tx1-Tx4 are connected to the optical coupler 111 through the first wavelength division multiplexer 112, the multiple uplink optical receivers Rx1-Rx4 are connected to the optical coupler 111 through the second wavelength division multiplexer 113, and the coupler 111 is further connected to the trunk optical fiber 131 of the optical distribution network 130.

The transmitting wavelengths of the multiple downlink optical transmitters Tx1-Tx4 are different from each other, where each of the downlink optical transmitters Tx1-Tx4 may correspond to one of wavelength channels of the multi-wavelength passive optical network system 100, for example, transmitting wavelengths of the multiple downlink optical transmitters Tx1-Tx4 may be λd1-λd4 respectively. The downlink optical transmitters Tx1-Tx4 may respectively use their transmitting wavelengths λd1-λd4 to transmit downlink data to corresponding wavelength channels so that the downlink data is received by the optical networks 120 that work on the wavelength channels. Accordingly, receiving wavelengths of the multiple uplink optical receivers Rx1-Rx4 may be different from each other, where each of the uplink optical receivers Rx1-Rx4 also corresponds to one of wavelength channels of the multi-wavelength passive optical network system 100, for example, receiving wavelengths of the multiple uplink optical receivers Rx1-Rx4 may be λu1-λu4 respectively. The uplink optical receivers Rx1-Rx4 may respectively use their receiving wavelengths λu1-λu4 to receive uplink data sent by optical network units 120 that work on corresponding wavelength channels.

The first wavelength division multiplexer 112 is configured to perform wavelength division multiplexing processing for the downlink data, with wavelengths λd1-λd4, that is transmitted by the multiple downlink optical transmitters Tx1-Tx4, and send the processed downlink data to the trunk optical fiber 131 of the optical distribution network 130 through the optical coupler 111, so as to provide the downlink data to the optical network units through the optical distribution network 130. In addition, the optical coupler 111 may be further configured to provide uplink data with wavelengths λu1-λu4 that comes from the multiple optical network units 120 to the second wavelength division multiplexer 113. The second wavelength division multiplexer 113 may demultiplex the uplink data with wavelengths λu1-λu4 to the uplink optical receivers Rx1-Rx4 for data receiving.

The processing module 114 may be a media access control (Media Access Control, MAC) module. In one aspect, it may specify, through wavelength negotiation, wavelength channels on which the multiple optical network units 120 work, and provide, according to a wavelength channel on which a certain optical network unit 120 works, downlink data to be sent to the optical network unit 120 to a downlink optical transmitter that corresponds to the wavelength channel, so that the downlink optical transmitter transmits the downlink data to the wavelength channel. In another aspect, the processing module 114 may further perform dynamic bandwidth allocation (Dynamic Bandwidth Allocation, DBA) for uplink sending of each wavelength channel, allocating an uplink sending timeslot to each optical network unit 120 that is multiplexed into a same wavelength channel in TDM manner, so as to authorize the optical network unit 120 to send uplink data in a specified timeslot through a corresponding wavelength channel.

The uplink transmitting wavelength and downlink receiving wavelength of each optical network unit 120 are adjustable. The optical network unit 120 may adjust, according to a wavelength channel specified by the optical line terminal 110, uplink transmitting wavelength and downlink receiving wavelength thereof to an uplink wavelength and a downlink wavelength of the wavelength channel, so as to implement sending and receiving of uplink and downlink data through the wavelength channel. For example, if the optical line terminal 110 instructs a certain optical network unit 120 to work on the wavelength channel 1 in a wavelength negotiation process, the optical network unit 120 may adjust its own uplink transmitting wavelength and downlink receiving wavelength to a first uplink wavelength λu1 and a first downlink wavelength λd1; and if the optical line terminal 110 instructs the optical network unit 120 to work on the wavelength channel 3, the optical network unit 120 may adjust its own uplink transmitting wavelength and downlink receiving wavelength to a third uplink wavelength λu3 and a first downlink wavelength λd3.

In a specific embodiment, the optical network unit 120 may include an optical coupler 121, a downlink optical receiver 122, an uplink optical transmitter 123, and a processing module 124, where the downlink optical receiver 122 and the uplink optical transmitter 123 are connected to corresponding tributary optical fibers of the optical network unit 120 through the optical coupler 121. In one aspect, the optical coupler 121 may provide uplink data sent by the uplink optical transmitter 123 to a tributary optical fiber of the optical distribution network 130 so that the optical distribution network 130 sends the uplink data to the optical line terminal 110. In another aspect, the optical coupler 121 may further provide downlink data that is sent by the optical line terminal 110 through the optical distribution network 130 to the downlink optical receiver 122 for data receiving.

The processing module 124 may be a MAC module. It may perform wavelength negotiation with the optical line terminal 110 and adjust, according to a wavelength channel specified by the optical line terminal 110, a receiving wavelength of the downlink optical receiver 122 and a transmitting wavelength of the uplink optical transmitter 123 (that is, adjusting the downlink receiving wavelength and uplink transmitting wavelength of the optical network unit 120), so that the optical network unit 120 works on the wavelength channel specified by the optical line terminal 110. In addition, the processing module 124 may further control, according to a dynamic bandwidth allocation result of the optical line terminal 110, the uplink optical transmitter 123 to send uplink data in a specified timeslot.

When the multi-wavelength passive optical network system 100 is running and the number of online optical network units 120 is relatively large, a relatively ideal condition is that there are partial optical network units 120 that work on the wavelength channel 1, partial optical network units 120 that work on the wavelength channel 2, partial optical network units 120 that work on the wavelength channel 3, and partial optical network units 120 that work on the wavelength channel 4, and the number of optical network units 120 on each wavelength channel are basically the same. In practical work, however, the number of optical network units 120 on each wavelength channel may be different because users dynamically get online and offline. For example, it is possible that the number of optical network units 120 on a certain wavelength channel is relatively large, while the number of optical network units 120 on another or other wavelength channels is relatively small, or a wavelength channel is not used by any optical network unit 120; that is, a load imbalance of wavelength channels occurs. In this case, the load of a wavelength channel used by a relatively large number of optical network units 120 is relatively heavy. When the load of a wavelength channel is excessively heavy, bandwidth shortage may occur because the optical network units 120 that work on a same wavelength channel perform service multiplexing in TDM manner, thereby affecting a normal service of the optical network units 120.

To implement load balancing, the multi-wavelength passive optical network system 100 may adopt a method for wavelength switching according to this embodiment of the present application. When a load imbalance of wavelength channels occurs, the optical line terminal 110 may instruct partial optical network units 120 to perform wavelength switching, so that the partial optical network units 120 switch to a wavelength channel with a relatively light load or an idle wavelength channel, thereby avoiding that a normal service is affected because a wavelength channel is overloaded.

In a specific embodiment, wavelength channel switching of the multi-wavelength passive optical network 100 may relate only to either downlink receiving wavelength switching or uplink transmitting wavelength switching of the optical network units 120. Alternatively, wavelength channel switching of the multi-wavelength passive optical network 100 may further include both downlink receiving wavelength switching and uplink transmitting wavelength switching of the optical network units 120.

### Embodiment 1

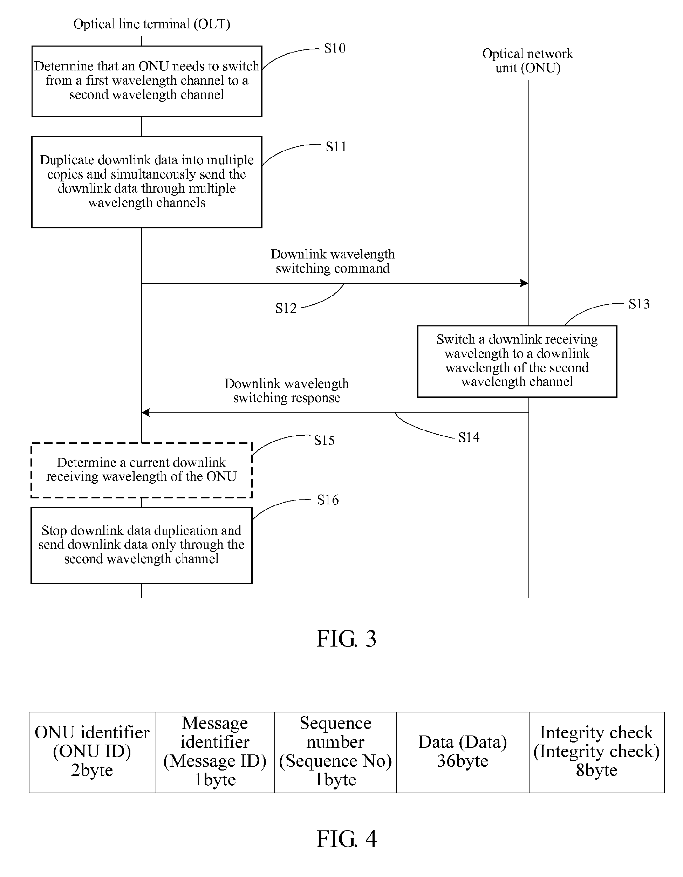

FIG. 3 is a flowchart of a method for wavelength switching on a multi-wavelength passive optical network according to an embodiment of the present application. The method for wavelength switching mainly relates to downlink receiving wavelength switching of an optical network unit 120. In addition to implementing downlink load balancing, the method may further effectively prevent downlink service interruption in a downlink receiving wavelength switching process of the optical network unit 120. Referring to FIG. 3, the method for wavelength switching may include:
Step S10: An optical line terminal 110 determines that it needs to instruct an optical network unit 120 to switch from a first wavelength channel to a second wavelength channel.

The optical line terminal 110 may check in real time uplink and downlink service loads of each wavelength channel of the multi-wavelength passive optical network 100. After it is detected that a load imbalance of wavelength channels occurs on the multi-wavelength passive optical network 100, for example, when the downlink load of a wavelength channel 1 is excessively heavy, the downlink load of the wavelength channel 3 is relatively light, and the downlink loads of wavelength channels 2 and 4 are normal, the optical line terminal 100 can determine that it needs to instruct partial optical network units 120, which originally work on the wavelength channel 1, to switch to the wavelength channel 3 for downlink service receiving. That is, in this case, the optical line terminal 110 can determine that it needs to instruct the partial optical network units 120 to switch their downlink receiving wavelength from a downlink wavelength λd1 of the wavelength channel 1 to a downlink wavelength λd3 of the wavelength channel 3.

It should be understood that the determining, according to a load of a wavelength channel, whether an optical network unit 120 needs to be instructed to perform wavelength switching is only a judgment criterion for implementing a load balancing. In a specific embodiment, the optical line terminal 110 may further determine, out of consideration for energy saving or optical transceiver replacement, whether it needs to instruct the optical network unit 120 to perform wavelength switching.

For example, when the optical line terminal 110 detects that only a few optical network units 120 work on a certain wavelength channel but other wavelength channels still have bandwidth resources, the optical line terminal 110 may determine, based on consideration for energy saving, that it needs to instruct the optical network units 120 to switch from the original wavelength channel to the wavelength channels that have bandwidth resources, and shut off the original wavelength channel so as to reduce overall power consumption of the multi-wavelength passive optical network system 100 and implement energy saving.

Alternatively, when the optical line terminal 110 detects that a certain optical transceiver (such as a downlink optical transmitter or an uplink optical receiver) is faulty or suffers performance degradation, it may determine that it needs to instruct an optical network unit 120 that works on a corresponding wavelength channel of the optical transceiver to switch to another wavelength channel for service sending and receiving, so as to avoid that the fault or performance degradation of the optical transceiver affects normal service personnel. In this way, maintenance personnel may replace the optical transceiver that is faulty or suffers performance degradation. In addition, after component replacement is completed, the optical line terminal 100 may further instruct, when necessary, the optical network unit 120 to switch back to the original working channel.
Step S11: The optical line terminal 110 duplicates downlink data that it originally prepares to send through the first wavelength channel to the optical network unit 120, and simultaneously sends the downlink data through multiple wavelength channels that include at least the first wavelength channel and the second wavelength channel.

Specifically, before instructing the optical network unit 120 to perform wavelength switching, the optical line terminal 110 may duplicate downlink data to be sent to the optical network unit 120 into multiple copies and modulate the multiple copies of the downlink data into output light of multiple downlink optical transmitters Tx1-Tx4, so as to implement the sending of downlink data to the optical network unit 120 through multiple wavelength channels.

In an embodiment, the multiple wavelength channels may be all wavelength channels of the multi-wavelength passive optical network 100, that is, a wavelength channel 1 to a wavelength channel 4. For example, the optical line terminal 110 may duplicate the downlink data into four copies and modulate them into output light, with wavelengths λd1-λd4, provided by the downlink optical transmitters Tx1-Tx4, so as to implement the simultaneous sending of the downlink data to the optical network unit 120 through the wavelength channel 1 to the wavelength channel 4. In a specific embodiment, generally the optical network unit 120 gradually adjusts, in temperature control or electrical control manner, its downlink receiving wavelength from a downlink wavelength of an original wavelength channel (that is, the first wavelength channel) to a downlink wavelength of a target wavelength channel (that is, the second wavelength channel) in a wavelength switching process. Therefore, the wavelength adjustment process is a relatively slow process, which needs to experience a certain period of time. Although the downlink receiving wavelength of the optical network unit 120 needs to experience different wavelength values in this period of time, because downlink data sent by the optical line terminal 110 is borne on all wavelength channels of the multi-wavelength passive optical network system 100, the downlink data can be received from a wavelength channel corresponding to a current wavelength value, no matter to which wavelength value the downlink receiving wavelength of the optical network unit 120 is adjusted at a certain moment, thereby ensuring a smooth downlink service in a wavelength channel switching process.

In another embodiment, the multiple wavelength channels may include only wavelength channels related to the wavelength channel switching, where the wavelength channels related to the wavelength channel switching may be wavelength channels corresponding to multiple downlink wavelength values that need to be experienced in a process of switching from the downlink wavelength of the original wavelength channel (that is, the first wavelength channel) to the downlink wavelength of the target wavelength channel (that is, the second wavelength channel). For example, assuming that the first wavelength channel that works as the original wavelength channel is the wavelength channel 1 and the second wavelength channel that works as the target wavelength channel is the wavelength channel 3, because downlink wavelengths λd1-λd4 of the wavelength channel 1 to the wavelength channel 4 satisfy λd1<λd2<λd3<λd4, the downlink receiving wavelength of the optical network unit 120 needs to experience three related wavelength values λd1, λd2, and λd3 in a process in which the optical network unit 120 adjusts its downlink receiving wavelength from the downlink wavelength λd1 of the wavelength channel 1 to the downlink wavelength λd3 of the wavelength channel 3. In this case, the multiple wavelength channels related to the wavelength channel switching include the wavelength channel 1 to the wavelength channel 3 whose downlink transmitting wavelengths are λd1, λd2, and λd3, respectively.
Step S12: The optical line terminal 110 sends a downlink wavelength switching command to the optical network unit 120, where the wavelength switching command is used to instruct the optical network unit 120 to switch to the second wavelength channel for downlink service receiving.

Specifically, the downlink wavelength switching command may include channel identifier information of the target wavelength channel (that is, the second wavelength channel) to which the optical network unit 120 needs to switch or a target downlink receiving wavelength (that is, the downlink wavelength of the second wavelength channel) to which the downlink wavelength of the optical network unit 120 needs to switch. In addition, the downlink wavelength switching command may also bear wavelength switching type information used to instruct the optical network unit 120 to perform downlink receiving wavelength switching.

In a specific embodiment, the optical line terminal 110 may bear the downlink wavelength switching command by using a physical layer operation, administration, and maintenance (Physical Layer Operations, Administration and Maintenance, PLOAM) message, an optical network terminal management and control interface (ONT Management and Control Interface, OMCI) message, a multi-point control protocol (Multi-Point Control Protocol, MPCP) message, or an operation, administration, and maintenance (Operation Administration and Maintenance, OAM) message. A specific message format such as a field value and a field length may be determined according to a practical requirement. Certainly, in another alternative embodiment, the optical line terminal 110 may also bear the downlink wavelength switching command by using a newly defined message.

Taking the adoption of a PLOAM message to bear the downlink wavelength switching command as an example, refer to FIG. 4, which is a schematic diagram of a message format of a PLOAM message. The PLOAM message generally includes an optical network unit identifier (ONU ID) field, a message identifier (Message ID) field, a sequence number (Sequence No) field, a data (Data) field, and an integrity check (Integrity Check) field. In this embodiment, information, related to wavelength switching, such as the wavelength switching type information, identifier information of the target wavelength channel, or target downlink receiving wavelength information may be borne in a data field of the PLOAM message. For example, the wavelength switching command may adopta format shown in the following table:

| **Octet (Octet)** | **Content (Cotent)** | **Description (Description)** |
|---|---|---|
| 1-2 | ONU identifier (ONU ID) | Identifier of an optical network unit that executes wavelength channel switching |
| 3 | Message identifier (Message ID) | 0xA9, indicating that the message type is a wavelength switching command |
| 4 | Sequence number (Sequence No) | 0x11, matching a command of a wavelength switching response |
| 5-40 | Data (Data) | Bear information related to wavelength switching, where an idle bit is filled with 0 by default |
| 41-48 | Message integrity check (MIC) | |

Step S13: The optical network unit 120 switches, according to an instruction of the downlink wavelength switching command, its downlink receiving wavelength to the downlink wavelength of the second wavelength channel.

Specifically, after receiving the downlink wavelength switching command sent by the optical line terminal 110, the optical network unit 120 may learn, from the information related to wavelength switching that the downlink wavelength switching command bears, that the optical line terminal 110 has specified that the optical network unit 120 needs to switch to the second wavelength channel. Therefore, the optical network unit 120 controls its downlink optical receiver 122 to adjust its downlink receiving wavelength from the downlink wavelength of the first wavelength channel to the downlink wavelength of the second wavelength channel.

Furthermore, the optical network unit 120 may receive, according to its downlink receiving wavelength at a current moment, downlink data that is sent by the optical line terminal 110 from a corresponding wavelength channel in a wavelength channel switching process. Specifically, because the optical line terminal 110 sends downlink data that is simultaneously borne on the multiple wavelength channels for sending, the optical network unit 120 may receive, in a wavelength switching process, downlink data from the optical line terminal 110 through a wavelength channel corresponding to a current downlink receiving wavelength, no matter at which wavelength value the current downlink receiving wavelength of the optical network unit 120 is located at a certain moment, thereby avoiding that a downlink service is interrupted in the wavelength switching process.
Step S14: The optical network unit 120 returns a downlink wavelength switching response to the optical line terminal 110, indicating whether the downlink wavelength switching is successful.

Specifically, after adjustment of the downlink receiving wavelength of the optical network unit 120 is completed, the optical network unit 120 may return a downlink wavelength switching response to the optical line terminal 110, so as to report a wavelength switching result to the optical line terminal 110. In a specific embodiment, optionally, the downlink wavelength switching response may include a downlink receiving wavelength to which the downlink wavelength of the optical network unit 120 is adjusted after the wavelength switching.

In a specific embodiment, similar to the downlink wavelength switching command, the downlink wavelength switching response may also be borne by using a PLOAM message, an OMCI message, an MPCP message, an OAM message, or other newly defined messages. Taking the adoption of a PLOAM message to bear the downlink wavelength switching response as an example, the downlink wavelength switching response may adopt a format shown in the following table:

| **Octet (Octet)** | **Content (Cotent)** | **Description (Description)** |
|---|---|---|
| 1-2 | ONU identifier (ONU ID) | Identifier of an optical network unit that executes wavelength channel switching |
| 3 | Message identifier (Message ID) | 0xA2, indicating that the message type is a wavelength switching response |
| 4 | Sequence number (Sequence No) | 0x11, matching a command of a wavelength switching command |
| 5 | Result (Result) | Wavelength switching execution result: 0 indicates successful execution, and other values indicate errors |
| 6 | Downlink receiving wavelength (Downstream Wavelength) | Optional field, indicating downlink receiving wavelength information after the optical network unit completes wavelength switching |
| 7-40 | Reserved field (Reserve) | |
| 41-48 | Message integrity check (MIC) | |

Step S15: The optical line terminal 110 determines, according to the downlink wavelength switching response returned by the optical network unit 120, a current downlink receiving wavelength of the optical network unit 120.

Specifically, after the optical line terminal 110 receives the downlink wavelength switching response returned from the optical network unit 120, if the downlink wavelength switching response includes a downlink receiving wavelength field, the optical line terminal 110 may obtain, from the downlink receiving wavelength field, a downlink receiving wavelength to which the downlink wavelength of the optical network unit 120 is adjusted after the wavelength switching, that is, a current downlink receiving wavelength of the optical network unit 120. The downlink receiving wavelength field of the wavelength switching response is an optional field. Therefore, it should be understood that Step S15 is an optional step, and the optical line terminal 110 needs to execute Step S15 only when the optical network unit 120 carries, in the downlink wavelength switching response, information about a downlink receiving wavelength to which the downlink wavelength of the optical network unit 120 is adjusted after the wavelength switching.

In addition, in a specific embodiment, the optical line terminal 110 may locally maintain a downlink service forwarding table or a table of information mappings between optical network units and downlink receiving wavelengths, where the forwarding table or information mapping table may include multiple entries, each of which includes an optical network unit information field and a downlink receiving wavelength field, used to indicate correspondence between optical network units 120 and downlink receiving wavelengths in the multi-wavelength passive optical network system 100. If the optical line terminal 110 locally maintains the forwarding table or mapping table, the optical line terminal 100 may further update, when determining a downlink receiving wavelength to which the downlink wavelength of the optical network unit 120 is adjusted after the wavelength switching, a downlink receiving wavelength information field in a related entry of the forwarding table or mapping table.
Step S16: The optical line terminal 110 stops downlink data duplication, and sends downlink data only through the second wavelength channel on which the optical network unit 120 works after the wavelength channel switching.

After learning from the downlink wavelength switching response that the optical network unit 120 has successfully switched to the second wavelength channel, the optical line terminal 110 may stop downlink data duplication related in Step S11 but merely modulates the downlink data into the downlink wavelength of the second wavelength channel, so as to implement the sending of the downlink data to the optical network unit 120 only through the second wavelength channel.

In the method for wavelength switching on a multi-wavelength passive optical network according to this embodiment of the present application, before the optical network unit 120 performs wavelength channel switching, the optical line terminal 110 duplicates downlink data and sends the downlink data simultaneously through multiple wavelength channels, thereby ensuring that the optical network unit 120 can receive the downlink data in a wavelength channel switching process, no matter in which wavelength state a current downlink receiving wavelength of the optical network unit 120 is. Therefore, even if the wavelength switching process needs to last a relatively long period of time, adopting the method for wavelength switching according to this embodiment of the present application may effectively ensure downlink service smoothness in a wavelength channel switching process, that is, it is avoided that a downlink service is in an interrupted state in the wavelength channel switching process, thereby improving a user's experience with a real-time service such as voice or video, effectively reducing a data packet loss, and ensuring service quality.

### Embodiment 2

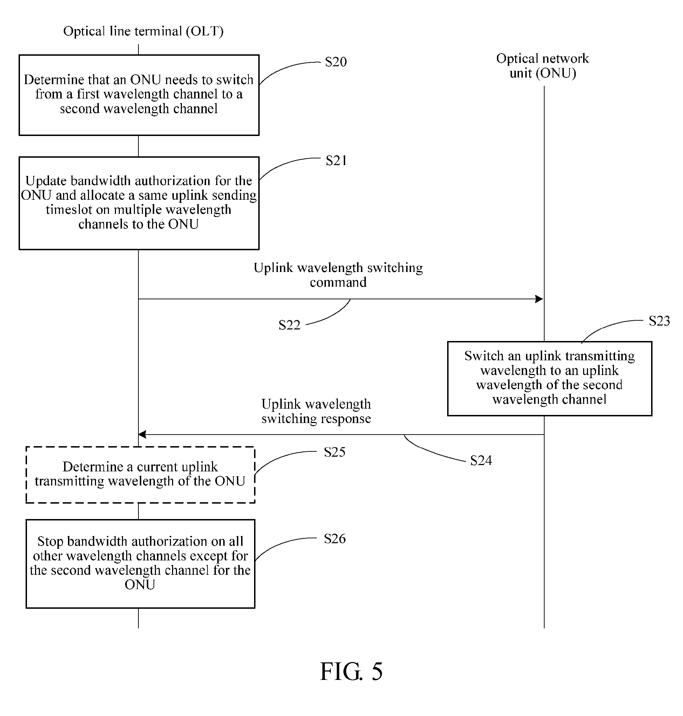

The present application further provides another method for wavelength switching on a multi-wavelength passive optical network, which is mainly for uplink transmitting wavelength switching of the optical network unit 120 and may further effectively avoid that an uplink service is interrupted in an uplink receiving wavelength switching process of the optical network unit 120, in addition to implementing uplink load balancing. Refer to FIG 5, which is a flowchart of a method for wavelength switching on a multi-wavelength passive optical network according to a second embodiment of the present application. The method for wavelength switching may include:
Step S20: An optical line terminal 110 determines that it needs to instruct an optical network unit 120 to switch from a first wavelength channel to a second wavelength channel.

For example, when the optical line terminal 110 detects that the loads of multiple wavelength channels of the multi-wavelength passive optical network system 100 are not balanced, or the optical line terminal 110 may determine, out of consideration for an energy saving requirement, or because the optical line terminal 110 finds that an optical transceiver is faulty or suffer performance degradation, that it needs to instruct a related optical network unit 120 to switch from an original working channel (that is, the first wavelength channel) to a target wavelength channel (that is, the second wavelength channel).
Step S21: The optical line terminal 110 updates bandwidth authorization for the optical network unit 120, and allocates a same uplink sending timeslot on multiple wavelength channels that include the first wavelength channel and the second wavelength channel to the optical network unit 120.

Specifically, before the optical network unit 120 performs wavelength switching, the optical line terminal 110 performs bandwidth authorization only on an original wavelength channel (that is, the first wavelength channel) where the optical network unit 120 works. That is, it performs dynamic bandwidth allocation (DBA) scheduling according to a service condition of the first wavelength channel, and authorizes an uplink sending timeslot for the optical network unit 120. When the optical line terminal 110 determines that the optical network unit 120 needs to perform wavelength switching, the optical line terminal 110 may, before issuing a wavelength switching instruction to the optical network unit 120, reserve a same timeslot on multiple different wavelength channels for the optical network unit 120, so as to authorize the optical network unit 120 to send, in a wavelength channel switching process, uplink data through a corresponding wavelength channel to the optical line terminal 110 according to an uplink transmitting wavelength to which the uplink wavelength of the optical network unit 120 is adjusted at a current moment.

In an embodiment, the multiple wavelength channels may be all wavelength channels of the multi-wavelength passive optical network 100, that is, the wavelength channel 1 to the wavelength channel 4. Alternatively, in another embodiment, the multiple wavelength channels may include only wavelength channels related to the wavelength channel switching, that is, wavelength channels corresponding to multiple uplink wavelength values that need to be experienced in a process of switching from an uplink wavelength of the original wavelength channel (that is, the first wavelength channel) to an uplink wavelength of the target wavelength channel (that is, the second wavelength channel). For example, assuming that the first wavelength channel is the wavelength channel 4 and the second wavelength channel is the wavelength channel 2, because downlink wavelengths λu1-λu4 of the wavelength channel 1 to the wavelength channel 4 satisfy λu1<λu2<λu3<λu4, the multiple wavelength channels related to the wavelength channel switching include the wavelength channel 2 to the wavelength channel 4 whose uplink wavelengths are λu2, λu3, and λu4 respectively.
Step S22: The optical line terminal 110 sends an uplink wavelength switching command to the optical network unit 120, where the uplink wavelength switching command is used to instruct the optical network unit 120 to switch to the second wavelength channel for uplink service sending.

Specifically, the uplink wavelength switching command may include wavelength identifier information of the target wavelength channel (that is, the second wavelength channel) to which the optical network unit 120 needs to switch or a target uplink transmitting wavelength (that is, the uplink wavelength of the second wavelength channel) to which the uplink wavelength of the optical network unit 120 needs to switch. In addition, the wavelength switching command may also bear wavelength switching type information used to instruct the optical network unit 120 to perform uplink transmitting wavelength switching.

In a specific embodiment, the wavelength switching command may also be borne by using a PLOAM message, an OMCI message, an MPCP message, an OAM message or other newly defined messages. For a specific message format of the wavelength switching command, reference may be made to the message format described in Step S12 in Embodiment 1.
Step S23: The optical network unit 120 switches, according to an instruction of the uplink wavelength switching command, its uplink transmitting wavelength to the uplink wavelength of the second wavelength channel.

Specifically, after receiving the uplink wavelength switching command sent by the optical line terminal 110, the optical network unit 120 may learn from the uplink wavelength switching command that the optical line terminal 110 has specified that the optical network unit 120 needs to switch to the second wavelength channel for uplink service sending. Therefore, the optical network unit 120 controls its uplink optical transmitter 123 to adjust its uplink transmitting wavelength from the uplink wavelength of the first wavelength channel to the uplink wavelength of the second wavelength channel. In addition, in a wavelength switching process, the optical network unit 120 may send uplink data to the optical line terminal 110 by using a wavelength channel that corresponds to a current uplink transmitting wavelength in a timeslot authorized by the optical line terminal 110. Specifically, because the optical line terminal 110 authorizes the same uplink sending timeslot on the multiple wavelength channels for the optical network unit 120, the optical network unit 120 may send, in an uplink wavelength switching process, uplink data to the optical line terminal 110 through a wavelength channel corresponding to a current uplink transmitting wavelength, no matter at which wavelength value the uplink transmitting wavelength of the optical network unit 120 is located at a certain moment, thereby avoiding that an uplink service is interrupted in the wavelength switching process.
Step S24: The optical network unit 120 returns an uplink wavelength switching response to the optical line terminal 110, indicating whether the uplink wavelength switching is successful.

In a specific embodiment, the uplink wavelength switching response may also be borne by using a PLOAM message, an OMCI message, an MPCP message, an OAM message or other newly defined messages. For a specific message format of the uplink wavelength switching command, reference may be made to the message format described in Step S14 in Embodiment 1. A major difference is that the downlink receiving wavelength field of the downlink wavelength switching response in Step S 14 needs to be replaced with an uplink transmitting wavelength field and bears an uplink transmitting wavelength value of the optical network unit 120 after the wavelength channel switching is completed.
Step S25: The optical line terminal 110 determines, according to the uplink wavelength switching response returned by the optical network unit 120, a current uplink transmitting wavelength of the optical network unit 120.

Specifically, if the uplink wavelength switching response includes an uplink transmitting wavelength field, the optical line terminal 110 may obtain, from the uplink transmitting wavelength field, an uplink transmitting wavelength to which the uplink wavelength of the optical network unit 120 is adjusted after the uplink wavelength switching. Step S15 is an optional step because the uplink wavelength field of the wavelength switching response is an optional field.

In addition, similar to Step S15 in Embodiment 1, in Step S25, if the optical line terminal 110 locally maintains a table of information mappings between optical network units and uplink transmitting wavelengths, the optical line terminal 110 may further update, when determining the uplink transmitting wavelength to which the uplink wavelength of the optical network unit 120 is adjusted after the uplink wavelength switching, an uplink transmitting wavelength information field in a related entry of the mapping table.
Step S26: The optical line terminal 110 stops bandwidth authorization on all other wavelength channels except for the second wavelength channel for the optical network unit 120, and authorizes, in a same uplink sending timeslot, the optical network unit 120 to send data only on the second wavelength channel.

After learning from the uplink wavelength switching response that the optical network unit 120 has successfully switched to the second wavelength channel, the optical line terminal 110 may stop bandwidth authorization, in Step S21, in a same timeslot of multiple wavelength channels for the optical network unit 120 but merely allocate an uplink sending timeslot on the second wavelength channel to the optical network unit 120, so that the optical network unit 120 sends the uplink data to the optical line terminal 110 only through the second wavelength channel after completing the wavelength channel switching.

In the method for wavelength switching on a multi-wavelength passive optical network according to this embodiment of the present application, before the optical network unit 120 performs wavelength channel switching, the optical line terminal 110 simultaneously allocates an uplink sending timeslot to the optical network unit 120 in a same timeslot of wavelength channels with different wavelengths, thereby ensuring that the optical network unit 120 can send the uplink data to the optical line terminal 110 in a wavelength channel switching process, no matter in which wavelength state a current uplink transmitting wavelength of the optical network unit 120 is. Therefore, even if the wavelength switching process needs to last a relatively long period of time, adopting the method for wavelength switching according to this embodiment of the present application may effectively ensure uplink service smoothness in a wavelength channel switching process, that is, it is avoided that an uplink service is in an interrupted state in the wavelength channel switching process, thereby ensuring service quality.

### Embodiment 3

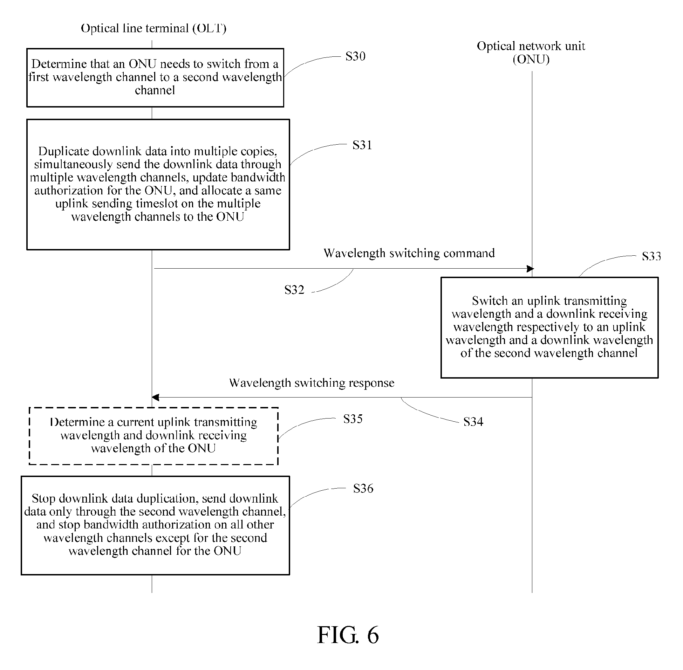

In terms of specific implementation of wavelength channel switching in the multi-wavelength passive optical network system 100, the optical network unit 120 may also implement simultaneous adjustment of an uplink transmitting wavelength and a downlink receiving wavelength in a same wavelength channel switching process. Refer to FIG. 6, which is a flowchart of a method for wavelength switching on a multi-wavelength passive optical network according to a third embodiment of the present application. The method for wavelength switching may include:
Step S30: An optical line terminal 110 determines that it needs to instruct an optical network unit 120 to switch from a first wavelength channel to a second wavelength channel.
Step S31: The optical line terminal 110, in one aspect, duplicates downlink data of the optical network unit 120 and simultaneously sends the downlink data through multiple wavelength channels that include at least the first wavelength channel and the second wavelength channel. In another aspect, the optical line terminal 110 further updates bandwidth authorization for the optical network unit 120 and allocates a same uplink sending timeslot on the multiple wavelength channels to the optical network unit 120.
Step S32: The optical line terminal 110 sends a wavelength switching command to the optical network unit 120, where the wavelength switching command is used to instruct the optical network unit 120 to switch to the second wavelength channel for downlink service receiving and uplink service sending.

That is to say, a downlink wavelength switching command and an uplink wavelength switching command sent by the optical line terminal 110 to the optical network unit 120 are borne in a same control message (that is, the wavelength switching command) sent to the optical network unit 120, so as to instruct the optical network unit 120 to simultaneously perform downlink receiving wavelength switching and uplink transmitting wavelength switching after the control message is received.
Step S33: The optical network unit 120 switches, according to an instruction of the wavelength switching command, its downlink receiving wavelength to a downlink wavelength of the second wavelength channel, and switches its uplink transmitting wavelength to an uplink wavelength of the second wavelength channel.
Step S34: The optical network unit 120 returns a wavelength switching response to the optical line terminal 110, indicating whether the wavelength switching is successful.
Step S35: The optical line terminal 110 determines, according to the wavelength switching response returned by the optical network unit 120, a current downlink receiving wavelength and uplink transmitting wavelength of the optical network unit 120.
Step S36: The optical line terminal 110 stops downlink data duplication, sends downlink data only through the second wavelength channel to which the optical network unit 120 switches, stops bandwidth authorization on all other wavelength channels except for the second wavelength channel for the optical network unit 120, and only authorizes, in a same timeslot, the optical network unit 120 to send uplink data on the second wavelength channel.

For a specific work process of Steps S30 to S36 in this embodiment, reference may be made to the two preceding embodiments. Details are not repeated herein.

Adopting the method for wavelength switching according to this embodiment may not only effectively ensure downlink service smoothness in a wavelength channel switching process, that is, it is avoided that a downlink service is in an interrupted state during the wavelength channel switching process, but also ensure that an uplink service is not interrupted in the wavelength channel switching process, thereby ensuring service quality.

Alternatively, in a specific embodiment, to improve reliability of the multi-wavelength passive optical network system 100, the optical line terminal 110 may fill downlink transmitting wavelength information of the optical line terminal 110 in a downlink data frame that bears the downlink data, so that the optical network unit 120 checks correctness of its own current downlink receiving wavelength. In addition, the optical network unit 120 may also fill uplink transmitting wavelength information and/or downlink receiving wavelength information of the optical network unit 120 in an uplink data frame that bears the uplink data, so that the optical line terminal 110 checks correctness of an uplink transmitting wavelength and a downlink receiving wavelength of the optical network unit 120. In this case, after completing wavelength switching, the optical network unit 120 does not need to return a wavelength switching response to the optical line terminal 110, and the optical line terminal 110 may directly determine whether the wavelength switching of the optical network unit 120 is successful according to uplink transmitting wavelength information and/or downlink receiving wavelength information borne in an uplink data frame that is sent by the optical network unit 120.

### Embodiment 4

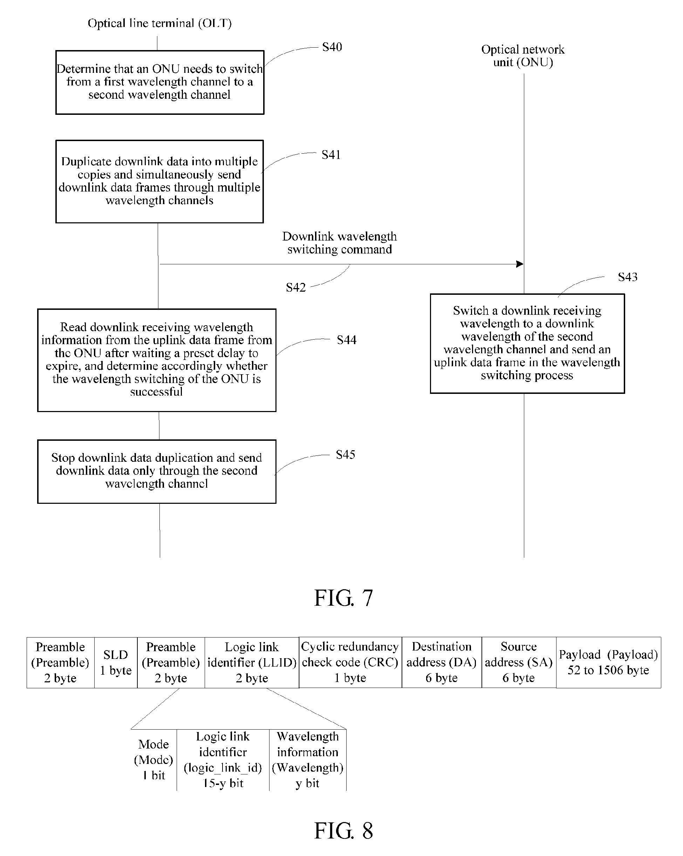

Refer to FIG. 7, which is a flowchart of a method for wavelength switching on a multi-wavelength passive optical network according to a fourth embodiment of the present application. This embodiment mainly relates to downlink receiving wavelength adjustment of the optical network unit 120. The method for wavelength switching may include:
Step S40: An optical line terminal 110 determines that it needs to instruct an optical network unit 120 to switch from a first wavelength channel to a second wavelength channel.
Step S41: The optical line terminal 110 duplicates downlink data that it originally prepares to send through the first wavelength channel to the optical network unit 120 into multiple copies, and simultaneously sends downlink data frames separately through multiple wavelength channels that include at least the first wavelength channel and the second wavelength channel, where the downlink data frames are used to bear the downlink data, and a downlink data frame sent through each wavelength channels also includes downlink transmitting wavelength information of the optical line terminal, that is, each of the multiple downlink data frames is filled with downlink wavelength information of a wavelength channel used to send the downlink data frame.

In a specific embodiment, the downlink data frames may be Ethernet frames (EPON frames for short), with logic link identifiers (Logic Link Identification, LLID), adopted on an Ethernet passive optical network (EPON), GPON transmission convergence (GPON Transmission Convergence, GTC) frames adopted on a Gigabit passive optical network (GPON), XGPON transmission convergence (XG-PON Transmission Convergence, XGTC) frames adopted on an XGPON, or the like for bearing the downlink data and the downlink transmitting wavelength information.

Taking an EPON frame as an example, refer to FIG. 8, which is a schematic diagram of a frame format of an EPON frame according to this embodiment of the present invention. The EPON frame includes an LLID field and a payload (Payload) field, where the downlink data may be borne in the payload field and the downlink transmitting wavelength information may be borne in the LLID field. Generally, the LLID field includes a mode (mode) subfield and an LLID subfield. In this embodiment, because the LLID field bears the downlink transmitting wavelength information, the LLID field further includes, in addition to the above two subfields, a wavelength information subfield used to bear the downlink transmitting wavelength information.

In another alternative embodiment, the downlink transmitting wavelength information may also be borne by using a PLOAM message, an OMCI message, an MPCP message, an OAM message, or other newly defined messages.
Step S42: The optical line terminal 110 sends a downlink wavelength switching command to the optical network unit 120, where the downlink wavelength switching command is used to instruct the optical network unit 120 to switch to the second wavelength channel for downlink service receiving.
Step S43: The optical network unit 120 switches, according to an instruction of the downlink wavelength switching command, its downlink receiving wavelength to a downlink wavelength of the second wavelength channel, and sends an uplink data frame that bears its downlink receiving wavelength information to the optical line terminal 110.

Specifically, after receiving the downlink wavelength switching command from the optical line terminal 110, the optical network unit 120 may control, according to the downlink wavelength switching command, its downlink optical receiver 122 to adjust its own downlink receiving wavelength. In addition, the optical network unit 120 may further obtain, from the downlink data frames sent by the optical line terminal 110, downlink sending wavelength information of wavelength channels, determines the correctness of a current downlink receiving wavelength of the optical network unit 120 according to the downlink sending wavelength information, and determines, according to a judgment result, whether the current downlink receiving wavelength needs to be further adjusted.

Furthermore, in a downlink receiving wavelength adjustment process, the optical network unit 120 may further bear, when sending an uplink data frame to the optical line terminal 110, its downlink receiving wavelength information in the uplink data frame and send the uplink data frame to the optical line terminal 110. In a specific embodiment, the uplink data frame may be an EPON frame, a GTC frame or an XGTC frame, and for its specific format, reference may be made to the description in Step S41. Taking an EPON frame as an example, similar to Step S42, the downlink receiving wavelength information may also be borne in a wavelength information subfield of the LLID field.
Step S44: After sending the downlink wavelength switching command to the optical network unit 120, the optical line terminal 110 waits a preset delay to expire, then reads the downlink receiving wavelength information from an uplink data frame from the optical network unit 120, and determines whether the wavelength switching of the optical network unit 120 is successful according to the downlink receiving wavelength information.

Unlike Embodiment 1 shown in FIG. 3, in this embodiment, after sending the downlink wavelength switching command to the optical network unit 120, the optical line terminal 110 does not need to wait for a wavelength switching response returned by the optical network unit 120. Instead, it waits a preset delay to expire, then reads the downlink receiving wavelength information of the optical network unit 120 from the uplink data frame that is sent by the optical network unit 120, and determines whether the wavelength switching of the optical network unit 120 is successful according to the downlink receiving wavelength information. In a specific embodiment, a length of the delay mainly depends on a time required for wavelength adjustment and stabilization of an optical transceiver of the optical network unit 120. Waiting the delay may ensure that the optical line terminal 110 obtains the downlink receiving wavelength information of the optical network unit 120 only after the downlink receiving wavelength switching is performed.

In another aspect, if the optical line terminal 110 determines, according to the downlink receiving wavelength information, that a downlink receiving wavelength of the optical network unit 120 after the wavelength switching does not accord with expectation, that is, the optical network unit 120 does not successfully adjust its downlink receiving wavelength to the downlink wavelength of the second wavelength channel, the optical line terminal 110 may resend a downlink wavelength switching command to the optical network unit 120, instructing the optical network unit 120 to perform downlink receiving wavelength adjustment again. That is, Steps S42 to S44 are repeated till downlink receiving wavelength switching of the optical network unit 120 is successful.
Step S45: The optical line terminal 110 stops downlink data duplication, and sends downlink data only through the second wavelength channel on which the optical network unit 120 works after the wavelength channel switching.

In the method for wavelength switching in this embodiment, for a specific work process of each step related to Embodiment 1, reference may be made to the description in Embodiment 1. Similar to Embodiment 1, adopting the method for wavelength switching in this embodiment may also effectively ensure downlink service smoothness during a wavelength channel switching process, that is, it is avoided that a downlink service is in an interrupted state during the wavelength channel switching process.

### Embodiment 5

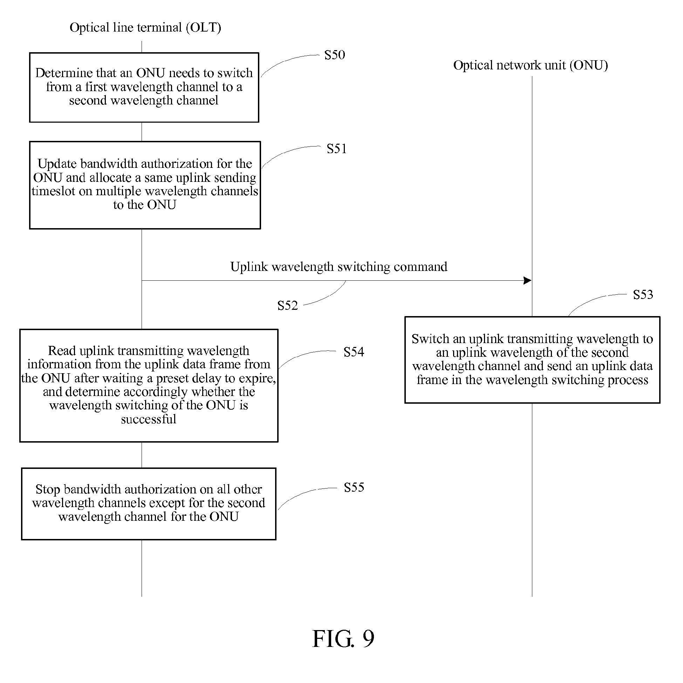

Refer to FIG. 9, which is a flowchart of a method for wavelength switching on a multi-wavelength passive optical network according to a fifth embodiment of the present application. This embodiment mainly relates to uplink transmitting wavelength adjustment of the optical network unit 120. The method for wavelength switching may include:
Step S50: An optical line terminal 110 determines that it needs to instruct an optical network unit 120 to switch from a first wavelength channel to a second wavelength channel.
Step S51: The optical line terminal 110 updates bandwidth authorization for the optical network unit 120, and allocates a same uplink sending timeslot on multiple wavelength channels that include the first wavelength channel and the second wavelength channel to the optical network unit 120.
Step S52: The optical line terminal 110 sends an uplink wavelength switching command to the optical network unit 120, where the uplink wavelength switching command is used to instruct the optical network unit 120 to switch to the second wavelength channel for uplink service sending.
Step S53: The optical network unit 120 switches, according to an instruction of the uplink wavelength switching command, its uplink transmitting wavelength to an uplink wavelength of the second wavelength channel, and sends an uplink data frame that bears its uplink transmitting wavelength information to the optical line terminal 110.

Similar to Embodiment 4, in an uplink transmitting wavelength adjustment process, the optical network unit 120 may bear, when sending an uplink data frame to the optical line terminal 110, its current uplink transmitting wavelength information in the uplink data frame and send the uplink data frame to the optical line terminal. In a specific embodiment, the uplink data frame may be an EPON frame, a GTC frame, or an XGTC frame. Taking the adoption of an EPON frame as an example, the uplink transmitting wavelength information may be borne in a wavelength information subfield of an LLID field.
Step S54: After sending the uplink wavelength switching command to the optical network unit 120, the optical line terminal 110 wait a preset delay to expire, reads the uplink transmitting wavelength information from the uplink data frame from the optical network unit 120, and determines whether the wavelength switching of the optical network unit 120 is successful according to the uplink transmitting wavelength information.

Unlike Embodiment 2 shown in FIG. 5, in this embodiment, after sending the uplink wavelength switching command to the optical network unit 120, the optical line terminal 110 does not need to wait for a wavelength switching response returned by the optical network unit. Instead, it waits a preset delay to expire, then reads the uplink transmitting wavelength information, of the optical network unit 120, from the uplink data frame that is sent by the optical network unit 120, and determines accordingly whether the wavelength switching of the optical network unit 120 is successful. In a specific embodiment, waiting the delay may also make the optical line terminal 110 obtain the uplink transmitting wavelength information of the optical network unit 120 only after the optical network unit 120 completes the uplink transmitting wavelength switching.

In another aspect, if the optical line terminal 110 determines, according to the uplink transmitting wavelength information, that an uplink transmitting wavelength to which the uplink wavelength of the optical network unit 120 is adjusted after the wavelength switching does not accord with expectation, that is, the optical network unit 120 does not successfully adjust its uplink transmitting wavelength to the uplink wavelength of the second wavelength channel, the optical line terminal 110 may resend an uplink wavelength switching command to the optical network unit 120, instructing the optical network unit 120 to perform uplink transmitting wavelength adjustment again. That is, Steps S52 to S54 are repeated till uplink transmitting wavelength switching of the optical network unit 120 is successful.
Step S55: The optical line terminal 110 stops bandwidth authorization on all other wavelength channels except for the second wavelength channel for the optical network unit 120, and authorizes, in a same uplink sending timeslot, the optical network unit 120 to send data only on the second wavelength channel.

In the method for wavelength switching in this embodiment, for a specific work process of each step related to Embodiment 2, reference may be made to the description in Embodiment 2. Similar to Embodiment 2, adopting the method for wavelength switching in this embodiment may also effectively ensure uplink service smoothness during a wavelength channel switching process, that is, it is avoided that an uplink service is in an interrupted state during the wavelength channel switching process.

### Embodiment 6

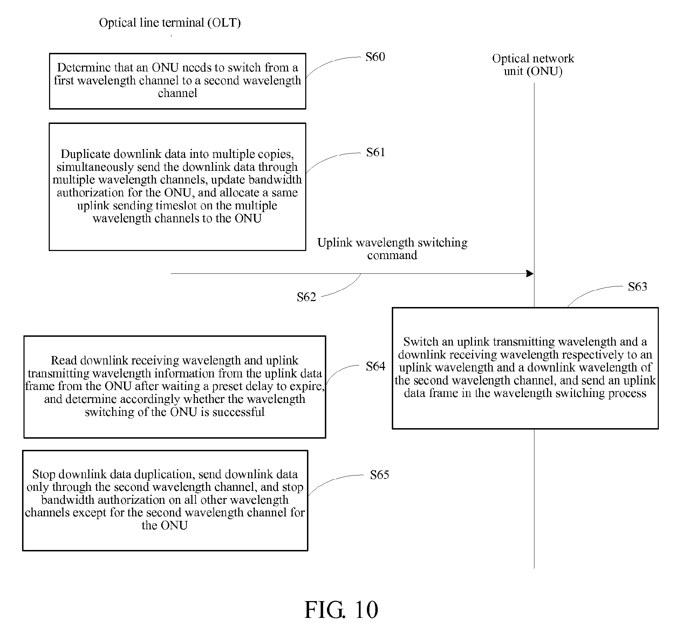

Refer to FIG. 10, which is a flowchart of a method for wavelength switching on a multi-wavelength passive optical network according to a sixth embodiment of the present application. This embodiment relates to both uplink transmitting wavelength and downlink receiving wavelength adjustment of the optical network unit 120. The method for wavelength switching may include:
Step S60: An optical line terminal 110 determines that it needs to instruct an optical network unit 120 to switch from a first wavelength channel to a second wavelength channel.
Step S61: The optical line terminal 110, in one aspect, duplicates downlink data of the optical network unit 120 and simultaneously sends the downlink data through multiple wavelength channels that include at least the first wavelength channel and the second wavelength channel. In another aspect, the optical line terminal 110 further updates bandwidth authorization for the optical network unit 120 and allocates a same uplink sending timeslot on the multiple wavelength channels to the optical network unit 120.
Step S62: The optical line terminal 110 sends a wavelength switching command to the optical network unit 120, where the wavelength switching command is used to instruct the optical network unit 120 to switch to the second wavelength channel for downlink service receiving and uplink service sending.
Step S63: The optical network unit 120 switches, according to an instruction of the wavelength switching command, its downlink receiving wavelength to a downlink wavelength of the second wavelength channel, and switches its uplink transmitting wavelength to an uplink wavelength of the second wavelength channel. In addition, the optical network unit 120 sends an uplink data frame that bears its downlink receiving wavelength information and uplink transmitting wavelength information to the optical line terminal 110.
Step S64: After sending the wavelength switching command to the optical network unit 120, the optical line terminal 110 waits a preset delay to expire, reads the downlink receiving wavelength information and the uplink transmitting wavelength information from the uplink data frame from the optical network unit 120, and determines whether the wavelength switching of the optical network unit 120 is successful according to the downlink receiving wavelength information and the uplink transmitting wavelength information. If the wavelength switching is not successful, the optical line terminal 110 instructs the optical network unit 120 to perform wavelength switching again.
Step S65: The optical line terminal 110 stops downlink data duplication, sends downlink data only through the second wavelength channel where the optical network unit 120 works after the wavelength channel switching, stops bandwidth authorization on all other wavelength channels except for the second wavelength channel for the optical network unit 120, and authorizes, in a same uplink sending timeslot, the optical network unit 120 to send data only on the second wavelength channel.

In the method for wavelength switching in this embodiment, for a specific work process of each step related to Embodiment 3, reference may be made to the description in Embodiment 3. Similar to Embodiment 3, adopting the method for wavelength switching in this embodiment may not only ensure downlink service smoothness during a wavelength channel switching process, that is, it is avoided that a downlink service is in an interrupted state during the wavelength channel switching process, but also avoid that an uplink service is in an interrupted state during the wavelength channel switching process, thereby ensuring service quality.

### Embodiment 7

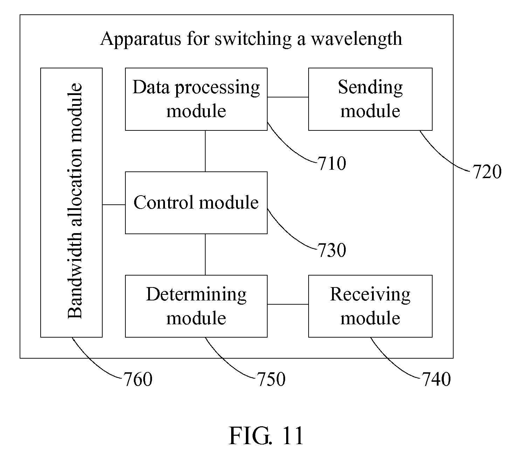

Based on a method for wavelength switching on a multi-wavelength passive optical network according to the foregoing embodiments, the present application further provides an apparatus for wavelength switching, where the apparatus for wavelength switching may be applied to the optical line terminal 110 of the multi-wavelength passive optical network system 100 shown in FIG. 2. Refer to FIG. 11, which is a schematic structural diagram of an apparatus for wavelength switching in a multi-wavelength passive optical network system according to an embodiment of the present application. The apparatus 700 for wavelength switching may include:
a data processing module 710, configured to duplicate, when an optical network unit 120 needs to switch from a first wavelength channel to a second wavelength channel, downlink data to be sent to the optical network unit 120 into multiple copies;
a sending module 720, configured to send the multiple copies of the downlink data to the optical network unit 120 separately through multiple wavelength channels, where the multiple wavelength channels include at least the first wavelength channel and the second wavelength channel; and
a control module 730, configured to control the sending module 720 to send a downlink wavelength switching command to the optical network unit 120, so as to instruct the optical network unit 120 to switch a downlink receiving wavelength of the optical network unit 120 to a downlink wavelength of the second wavelength channel, and after it is determined that the downlink receiving wavelength switching of the optical network unit 120 is successful, control the data processing module to stop downlink data duplication and control the sending module 720 to send the downlink data to the optical network unit only through the second wavelength channel; where
the multiple wavelength channels include all wavelength channels of the multi-wavelength passive optical network 100, that is, the wavelength channel 1 to the wavelength channel 4; alternatively, the multiple wavelength channels may include only wavelength channels related to the downlink wavelength channel switching, that is, wavelength channels corresponding to multiple downlink wavelength values that need to be experienced in a process of switching the downlink receiving wavelength of the optical network unit 120 from a downlink wavelength of the first wavelength channel to the downlink wavelength of the second wavelength channel.

Further, the apparatus 700 for wavelength switching may further include a receiving module 740 and a determining module 750.

In an embodiment, the receiving module 740 may be configured to receive a downlink wavelength switching response returned by the optical network unit 120, where the downlink wavelength switching response includes downlink receiving wavelength information of the optical network unit 120 after the wavelength switching; and the determining module 750 is configured to determine whether the downlink receiving wavelength switching of the optical network unit 120 is successful according to the downlink receiving wavelength information that the downlink wavelength switching response bears.

Alternatively, in another embodiment, the receiving module 740 may be configured to receive an uplink wavelength switching response returned by the optical network unit 120, where the uplink wavelength switching response includes uplink transmitting wavelength information of the optical network unit 120 after the wavelength switching; and the determining module 750 may be configured to determine whether the uplink transmitting wavelength switching of the optical network unit 120 is successful according to the uplink transmitting wavelength information. Further, the data processing module 710 may be further configured to separately bear the downlink data that is obtained by duplication in multiple downlink data frames, where each downlink data frame further includes downlink wavelength information of a wavelength channel used to transmit the downlink data frame.

Optionally, in an embodiment, the apparatus 700 for wavelength switching may further include:
a bandwidth allocation module 760, configured to update bandwidth authorization for the optical network unit 120 and allocate a same uplink sending timeslot on the multiple wavelength channels to the optical network unit 120.

In addition, the control module 730 is further configured to control the sending module 720 to send an uplink wavelength switching command to the optical network unit 120, so as to instruct the optical network unit 120 to switch an uplink transmitting wavelength of the optical network unit 120 to an uplink wavelength of the second wavelength channel; and after it is determined that the uplink transmitting wavelength switching of the optical network unit 120 is successful, control the bandwidth allocation module 760 to stop allocating an uplink sending timeslot to the optical network unit 120 on all other wavelength channels except for the second wavelength channel and to authorize the optical network unit 120 to send uplink data only in an uplink sending timeslot of the second wavelength channel.

Optionally, the downlink wavelength switching command and the uplink wavelength switching command may be borne in a same control message that is sent to the optical network unit 120, where the control message is used to instruct the optical network unit to simultaneously perform downlink receiving wavelength switching and uplink transmitting wavelength switching.

Alternatively, in an embodiment, the receiving module 740 may be configured to receive uplink data sent by the optical network unit 120, wait a preset delay to expire after the sending module 720 sends a downlink wavelength switching command to the optical network unit 120, and then read downlink receiving wavelength information of the optical network unit 120 from an uplink data frame sent by the optical network unit 120; and the determining module 750 may be configured to determine whether the downlink receiving wavelength switching of the optical network unit is successful according to the downlink receiving wavelength information that is borne in the uplink data frame.

In another embodiment, the receiving module 740 may be configured to receive uplink data sent by the optical network unit 120, wait a preset delay to expire after the sending module 720 sends a downlink wavelength switching command to the optical network unit 120, and then read uplink transmitting wavelength information of the optical network unit 120 from an uplink data frame sent by the optical network unit 120; and the determining module 750 may be configured to determine whether the uplink transmitting wavelength switching of the optical network unit 120 is successful according to the uplink transmitting wavelength information.

In a specific embodiment, when the apparatus 700 for wavelength switching is applied to the multi-wavelength passive optical network system 100 shown in FIG. 2, the sending module 720 may mainly include downlink optical transmitters Tx1-Tx4 of the optical line terminal 110 and a first wavelength multiplexing apparatus 112; the receiving module 740 may mainly include downlink optical receivers Rx1-Rx4 of the optical line terminal 110 and a second wavelength multiplexing apparatus 113; and the data processing module 710, the control module 730, the determining module 750 and the bandwidth allocation module 760 may be implemented by using a processing module 114 (such as a MAC module) of the optical line terminal 110.

It should be understood that the foregoing descriptions are merely about major functions of functional modules of the apparatus 700 for wavelength switching. For specific work processes of the functional modules, reference may be made to the methods for wavelength switching provided in Embodiment 1 to Embodiment 6.

Through the description in the foregoing embodiments, persons skilled in the art may be clearly aware that the present invention may be implemented through software in addition to a necessary hardware platform, or all through hardware. Based on such an understanding, all or a part of the technical solutions of the present invention which contribute to the prior art may be implemented in the form of a software product. The computer software product may be stored in a storage medium such as a ROM/RAM, a magnetic disk, or an optical disk, and includes several instructions for instructing a computer device (which may be a personal computer, a server, or a network device) to perform the methods described in all or part of the embodiments of the present invention.

The foregoing descriptions are merely exemplary specific embodiments of the present invention, but are not intended to limit the protection scope of the present invention. Any variation or replacement made by persons skilled in the art without departing from the present invention shall fall within the protection scope of the present invention. Therefore, the protection scope of the present invention shall be subject to the protection scope of the claims.

## Claims

1. A method for wavelength switching on a multi-wavelength passive optical network, comprising:
duplicating, when an optical network unit needs to switch from a first wavelength channel to a second wavelength channel, downlink data to be sent to the optical network unit into multiple copies, and sending the multiple copies of the downlink data to the optical network unit separately through multiple wavelength channels, wherein the multiple wavelength channels comprise at least the first wavelength channel and the second wavelength channel;
sending a downlink wavelength switching command to the optical network unit to instruct the optical network unit to switch a downlink receiving wavelength of the optical network unit to a downlink wavelength of the second wavelength channel; and
stopping downlink data duplication and sending the downlink data to the optical network unit only through the second wavelength channel after determining that the downlink receiving wavelength switching of the optical network unit is successful.

2. The method according to claim 1, wherein the multiple wavelength channels comprise all wavelength channels of the multi-wavelength passive optical network system.

3. The method according to claim 1, wherein the multiple wavelength channels comprise wavelength channels corresponding to multiple downlink wavelength values that need to be experienced in a process of switching the downlink receiving wavelength of the optical network unit from a downlink wavelength of the first wavelength channel to the downlink wavelength of the second wavelength channel.

4. The method according to any one of claims 1 to 3, further comprising:
receiving a downlink wavelength switching response returned by the optical network unit, wherein the downlink wavelength switching response comprises downlink receiving wavelength information of the optical network unit after the wavelength switching; and
determining whether the downlink receiving wavelength switching of the optical network unit is successful according to the downlink receiving wavelength information.

5. The method according to any one of claims 1 to 3, further comprising:
waiting a preset delay to expire after sending the downlink wavelength switching command to the optical network unit, and then reading downlink receiving wavelength information of the optical network unit from an uplink data frame sent by the optical network unit; and
determining whether the downlink receiving wavelength switching of the optical network unit is successful according to the downlink receiving wavelength information.

6. The method according to claim 5, wherein the downlink data is separately borne in downlink data frames and separately sent to the optical network unit through multiple wavelength channels, and each downlink data frame further comprises downlink wavelength information of a wavelength channel used to transmit the downlink data frame.

7. The method according to any one of claims 1 to 6, further comprising:
updating, by an optical line terminal, bandwidth authorization for the optical network unit, and allocating a same uplink sending timeslot on the multiple wavelength channels to the optical network unit;
sending an uplink wavelength switching command to the optical network unit to instruct the optical network unit to switch an uplink receiving wavelength thereof to an uplink wavelength of the second wavelength channel; and
after determining that the uplink transmitting wavelength of the optical network unit is successful, stopping allocating an uplink sending timeslot to the optical network unit on all other wavelength channels except for the second wavelength channel, and authorizing the optical network unit to send uplink data only in an uplink sending timeslot of the second wavelength channel.

8. The method according to claim 7, wherein the downlink wavelength switching command and the uplink wavelength switching command are borne in a same control message that is sent to the optical network unit, and the control message is used to instruct the optical network unit to simultaneously perform downlink receiving wavelength switching and uplink transmitting wavelength switching.

9. The method according to claim 7, further comprising:
receiving an uplink wavelength switching response returned by the optical network unit, wherein the uplink wavelength switching response comprises uplink transmitting wavelength information of the optical network unit after the wavelength switching; and
determining whether the uplink transmitting wavelength switching of the optical network unit is successful according to the uplink transmitting wavelength information.

10. The method according to claim 7, further comprising:
waiting a preset delay to expire after sending the downlink wavelength switching command to the optical network unit, and then reading uplink transmitting wavelength information of the optical network unit from an uplink data frame sent by the optical network unit; and
determining whether the uplink transmitting wavelength switching of the optical network unit is successful according to the uplink transmitting wavelength information.

11. An apparatus for wavelength switching on a multi-wavelength passive optical network, comprising:
a data processing module, configured to duplicate, when an optical network unit needs to switch from a first wavelength channel to a second wavelength channel, downlink data to be sent to the optical network unit into multiple copies;
a sending module, configured to send the multiple copies of the downlink data to the optical network unit separately through multiple wavelength channels, wherein the multiple wavelength channels comprise at least the first wavelength channel and the second wavelength channel; and
a control module, configured to control the sending module to send a downlink wavelength switching command to the optical network unit, so as to instruct the optical network unit to switch a downlink receiving wavelength of the optical network unit to a downlink wavelength of the second wavelength channel, and after determining that the downlink receiving wavelength switching of the optical network unit is successful, control the data processing module to stop downlink data duplication and control the sending module to send the downlink data to the optical network unit only through the second wavelength channel.

12. The apparatus according to claim 11, wherein the multiple wavelength channels comprise all wavelength channels of the multi-wavelength passive optical network.

13. The apparatus according to claim 11, wherein the multiple wavelength channels comprise wavelength channels corresponding to multiple downlink wavelength values that need to be experienced in a process of switching the downlink receiving wavelength of the optical network unit from a downlink wavelength of the first wavelength channel to the downlink wavelength of the second wavelength channel.

14. The apparatus according to any one of claims 11 to 13, further comprising:
a receiving module, configured to receive a downlink wavelength switching response returned by the optical network unit, wherein the downlink wavelength switching response comprises downlink receiving wavelength information of the optical network unit after the wavelength switching; and
a determining module, configured to determine whether the downlink receiving wavelength switching of the optical network unit is successful according to the downlink receiving wavelength information.

15. The apparatus according to any one of claims 11 to 13, further comprising:
a receiving module, configured to receive uplink data sent by the optical network unit, wait a preset delay to expire after the sending module sends the downlink wavelength switching command to the optical network unit, and then read downlink receiving wavelength information of the optical network unit from an uplink data frame sent by the optical network unit; and
a determining module, configured to determine whether the downlink receiving wavelength switching of the optical network unit is successful according to the downlink receiving wavelength information.

16. The apparatus according to claim 15, wherein the data processing module is further configured to separately bear the downlink data that is obtained by duplication in multiple downlink data frames, and each downlink data frame further comprises downlink wavelength information of a wavelength channel used to transmit the downlink data frame.

17. The apparatus according to claim 11, further comprising:
a bandwidth allocation module, configured to update bandwidth authorization for the optical network unit and allocate a same uplink sending timeslot on the multiple wavelength channels to the optical network unit; wherein
the control module is further configured to control the sending module to send an uplink wavelength switching command to the optical network unit, so as to instruct the optical network unit to switch an uplink transmitting wavelength of the optical network unit to an uplink wavelength of the second wavelength channel; and after it is determined that the uplink transmitting wavelength switching of the optical network unit is successful, control the bandwidth allocation module to stop allocating an uplink sending timeslot to the optical network unit on all other wavelength channels except for the second wavelength channel and to authorize the optical network unit to send uplink data only in an uplink sending timeslot of the second wavelength channel.

18. The apparatus according to claim 17, wherein the downlink wavelength switching command and the uplink wavelength switching command are borne in a same control message that is sent to the optical network unit, and the control message is used to instruct the optical network unit to simultaneously perform downlink receiving wavelength switching and uplink transmitting wavelength switching.

19. The apparatus according to claim 17, further comprising:
a receiving module, configured to receive an uplink wavelength switching response returned by the optical network unit, wherein the uplink wavelength switching response comprises uplink transmitting wavelength information of the optical network unit after the wavelength switching; wherein
the determining module is further configured to determine whether the uplink transmitting wavelength switching of the optical network unit is successful according to the uplink transmitting wavelength information.

20. The apparatus according to claim 17, further comprising:
a receiving module, configured to receive uplink data sent by the optical network unit, wait a preset delay to expire after the sending module sends the downlink wavelength switching command to the optical network unit, and then read uplink transmitting wavelength information of the optical network unit from an uplink data frame sent by the optical network unit; and
a determining module, configured to determine whether the uplink transmitting wavelength switching of the optical network unit is successful according to the uplink transmitting wavelength information.

21. A multi-wavelength passive optical network system with M wavelength channels, wherein M is larger than 1, the multi-wavelength passive optical network system comprises at least one optical line terminal, multiple optical network units, and one optical distribution network, and the optical line terminal is connected to the multiple optical network units through the optical distribution network; and
the optical line terminal is configured to duplicate, when an optical network unit needs to switch from a first wavelength channel to a second wavelength channel, downlink data to be sent to the optical network unit into multiple copies, and send the multiple copies of the downlink data to the optical network unit separately through multiple wavelength channels that comprise at least the first wavelength channel and the second wavelength channel; send a downlink wavelength switching command to the optical network unit to instruct the optical network unit to switch a downlink receiving wavelength of the optical network unit to a downlink wavelength of the second wavelength channel; and stop downlink data duplication and send the downlink data to the optical network unit only through the second wavelength channel after determining that the downlink receiving wavelength switching of the optical network unit is successful.

22. The system according to claim 21, wherein:
the optical network unit is configured to switch, according to the downlink receiving wavelength switching command sent by the optical line terminal, the downlink receiving wavelength thereof to the downlink wavelength of the second wavelength channel, and receive, according to a downlink receiving wavelength to which the optical network unit is adjusted at a current moment, the downlink data from a corresponding wavelength channel in the wavelength switching process.

23. The system according to claim 22, wherein the multiple wavelength channels comprise all wavelength channels of the multi-wavelength passive optical network system.

24. The system according to claim 22, wherein the multiple wavelength channels comprise wavelength channels corresponding to multiple downlink wavelength values that need to be experienced in a process of switching the downlink receiving wavelength of the optical network unit from a downlink wavelength of the first wavelength channel to the downlink wavelength of the second wavelength channel.

25. The system according to any one of claims 21 to 24, wherein:
the optical line terminal is further configured to update bandwidth authorization for the optical network unit and allocate a same uplink sending timeslot on the multiple wavelength channels to the optical network unit when the optical network unit needs to switch from the first wavelength channel to the second wavelength channel; send an uplink wavelength switching command to the optical network unit to instruct the optical network unit to switch an uplink transmitting wavelength of the optical network unit to an uplink wavelength of the second wavelength channel; and after determining that the uplink transmitting wavelength switching of the optical network unit is successful, stop allocating an uplink sending timeslot to the optical network unit on all other wavelength channels except for the second wavelength channel, and authorize the optical network unit to send uplink data only in an uplink sending timeslot of the second wavelength channel.

26. The system according to claim 25, wherein:
the optical network unit is further configured to switch the uplink transmitting wavelength thereof to an uplink wavelength of the second wavelength channel according to the uplink wavelength switching command, and send, according to an uplink transmitting wavelength to which the optical network unit is adjusted at a current moment, uplink data to the optical line terminal in the wavelength switching process by using a corresponding wavelength channel in an uplink transmitting timeslot that is authorized by the optical line terminal.

27. The system according to claim 26, wherein the downlink wavelength switching command and the uplink wavelength switching command are borne in a same control message that is sent to the optical network unit, and the control message is used to instruct the optical network unit to simultaneously perform downlink receiving wavelength switching and uplink transmitting wavelength switching.
